**Europäisches Patentamt**

(19) **European Patent Office**

**Office européen des brevets**

(11) Veröffentlichungsnummer: **0 082 284**
**B1**

(12) # EUROPÄISCHE PATENTSCHRIFT

(45) Veröffentlichungstag der Patentschrift:
**17.09.86**

(51) Int. Cl.⁴: **A 23 L 1/221**

(21) Anmeldenummer: **82110240.7**

(22) Anmeldetag: **06.11.82**

(54) Verfahren zur Gewinnung oder Anreicherung von Aromastoffen.

(30) Priorität: **19.11.81 DE 3145673**

(43) Veröffentlichungstag der Anmeldung:
**29.06.83 Patentblatt 83/26**

(45) Bekanntmachung des Hinweises auf die Patenterteilung:
**17.09.86 Patentblatt 86/38**

(84) Benannte Vertragsstaaten:
**AT BE CH DE FR GB IT LI NL SE**

(56) Entgegenhaltungen:
**DE - A - 2 233 038**
**DE - A - 2 452 693**

**"TECHNIQUES D'ANALYSE ET DE CONTROLE DANS LES INDUSTRIES AGROALIMENTAIRES" G. LINDEN, VOL. 2, pp 68,69,74-77, 1981**

**Die Akte enthält technische Angaben, die nach dem Eingang der Anmeldung eingereicht wurden und die nicht in dieser Patentschrift enthalten sind.**

(73) Patentinhaber: **Merck Patent Gesellschaft mit beschränkter Haftung, Frankfurter Strasse 250, D-6100 Darmstadt (DE)**

(72) Erfinder: **Eisenbeiss, Friedhelm, Dr., Luisenstrasse 28, D-6108 Weiterstadt (DE)**
Erfinder: **Meyer, Otto-Werner, Kleiststrasse 34, D-6100 Darmstadt 12 (DE)**

## Beschreibung

Die Erfindung betrifft ein Verfahren zur Gewinnung oder Anreicherung von Aromastoffen aus wässrigen Lösungen.

Aromastoffe spielen bei zahlreichen industriellen Verfahren eine grosse Rolle. Dabei sind dies einmal Verfahren, die allein auf die Gewinnung von Aromastoffen in Form von Essenzen aus Früchten, Gewürzen, Blüten und ähnlichem gerichtet sind und zum anderen Verfahren zur Herstellung oder Veredlung von Nahrungs- und Genussmitteln, bei denen die Erhaltung der natürlichen Aromastoffe, wie Duft- und Geschmacksstoffe, die Qualität der Produkte bestimmt bzw. diese Produkte erst genussfähig macht.

Das aus einer bestimmten Quelle, z.B. einer Frucht, stammende Aroma ist kein chemisch einheitlicher Stoff, sondern setzt sich zusammen aus einer Vielzahl von unterschiedlichen chemischen Individuen, die erst in ihrer Gesamtheit das sensorische Ergebnis des natürlichen Aromas ergeben. Bei jeder Handhabung von aromastoffhaltigen Medien besteht daher die Gefahr, dass Teile der natürlichen Mischung verlorengehen und damit der natürliche Charakter gemindert oder gar zerstört wird. Dies ist insbesondere dann der Fall, wenn aromastoffhaltige Lösungen konzentriert werden, wie z.B. bei der Herstellung von Fruchtsaftkonzentraten oder von Pulverkaffee. In diesen Fällen wird zusammen mit dem abgedampften Wasser ein Teil der im Fruchtsaft bzw. dem Kaffee-Extrakt enthaltenen Aromastoffe entfernt, und es gibt bisher keine Möglichkeit, die im Kondensat enthaltenen Aromastoffe zurückzugewinnen.

In der DE-A-2 452 693 wird ein Verfahren zur Gewinnung oder Anreicherung von Aromastoffen aus wässrigen Lösungen beschrieben, wobei eine wässrige Lösung der Aromastoffe mit einem makrovernetzten Harz aus der Familie der Polystyrole oder Polystyrol-Derivate, insbesondere Polydivinylbenzol oder Mischpolymere davon, in Berührung gebracht wird. Dies kann z.B. dadurch geschehen, dass die wässrige Lösung durch eine das Harz haltende Säule gepumpt wird. Es werden dabei 2 Fraktionen von Aromastoffen gewonnen, wobei die eine Fraktion aus den vom Harz zurückgehaltenen Stoffen und die zweite aus den in der wässrigen Lösung verbleibenden Stoffen besteht. Die vom Harz zurückgehaltenen Stoffe können durch Elution mit einem organischen Lösungsmittel gewonnen werden, wobei ein Anreicherungsfaktor von 36 erzielt wird. Es ist nach diesem Verfahren weder möglich, ein Gesamtaroma zu erhalten, noch das Aroma in konzentrierter Form, d.h. mit einem hohen Anreicherungsfaktor, zu gewinnen.

Verallgemeinernd kann man sagen, dass bisher keine in technischem Massstab verwertbare Verfahren existieren, Aromastoffe, d.h. in der Regel relativ leicht flüchtige organische Verbindungen, aus grossen Volumina eines wässrigen Mediums in konzentrierter Form zu gewinnen, so dass die Aufgabe bestand, ein solches Verfahren zu finden.

Es wurde nun gefunden, dass spezielle, organisch modifizierte, poröse Sorbentien in der Lage sind, auch aus stark verdünnten wässrigen Lösungen Aromastoffe selektiv anzureichern, dass aber andererseits die so angereicherten Aromastoffe mit geringen Volumina geeigneter organischer Lösungsmittel von diesen Sorbentien gewonnen werden können.

Gegenstand der Erfindung ist daher ein Verfahren zur Gewinnung oder Anreicherung von Aromastoffen aus wässrigen Lösungen, das dadurch gekennzeichnet ist, dass die wässrige Lösung durch eine Schüttung eines mit Kohlenwasserstoffresten mit 1–24 C-Atomen modifizierten Kieselgels geschickt wird, wobei die wässrige Lösung in einer Menge von 50–1000 l pro kg Kieselgel eingesetzt wird, und dass die Schüttung danach mit etwa 50 bis etwa 50 ml eines organischen Lösungsmittels pro kg Kieselgel eluiert wird.

Als wässrige Lösung im Sinne dieser Erfindung sind alle wässrigen Systeme zu verstehen, die Aromastoffe in weitgehend homogener Verteilung enthalten, wie z.B. neben echten Lösungen auch kolloidale Lösungen oder feine Emulsionen.

Gegenüber herkömmlichen Verfahren zur Gewinnung von Aromastoffen hat das erfindungsgemässe Verfahren den Vorteil, ohne Einsatz von wesentlichen Energiekosten zu arbeiten und darüber hinaus die Gewinnung von Aromastoffen auch aus solchen Lösungen zu gestatten, die bisher mangels anderer Möglichkeiten zum Abwasser gelangten. So können z.B. bei der Konzentrierung von Fruchtsäften die im Brüdenkondensat enthaltenen Aromastoffe, die bisher verlorengingen, gewonnen und ggf. dem Konzentrat zugesetzt werden. Bei der Herstellung von Pulverkaffee war es bisher üblich, das bei der Heissdampfextraktion erhaltene Brüdenkondensat wegen der darin enthaltenen Aromastoffe dem Heisswasserextrakt zuzusetzen, um die so erhaltene Lösung gemeinsam einer Sprühtrocknung oder Lyophilisierung zu unterwerfen. Bei der Sprühtrocknung oder Lyophilisierung gingen dann jedoch wieder wertvolle Aromastoffe verloren.

Nach dem erfindungsgemässen Verfahren dagegen können die Aromastoffe direkt dem Brüdenkondensat entzogen und dem Extrakt zugesetzt werden, wodurch bei der Lyophilisierung oder Sprühtrocknung eine sehr viel geringere Flüssigkeitsmenge verdampft werden muss, wodurch sehr viel Energie eingespart wird. Darüber hinaus können jedoch aus dem bei der Lyophilisierung oder Sprühtrocknung entstehenden Kondensat die darin enthaltenen Aromastoffe, die bisher verlorengingen, wiedergewonnen werden.

Überraschend dabei ist, dass nach dem erfindungsgemässen Verfahren nicht nur einige Komponenten des sehr heterogenen Aromastoffgemisches gewonnen werden, sondern dass offenbar das gesamte Spektrum in seiner natürlichen Zusammensetzung gewonnen wird, da der sensorische Eindruck der erfindungsgemäss gewonnenen Produkte sich nicht wesentlich von dem der Ausgangsstoffe unterscheidet. Dies lässt darauf schliessen, dass überraschenderweise offenbar auch keinerlei Zersetzung der zum Teil sehr empfindlichen Aromastoffe an den verwendeten hochaktiven Sorbentien mit spezifischen Oberflächen von zum Teil bis zu 800 m²/g stattfindet.

Trotz der hohen Effektivität ist das erfindungsgemässe Verfahren sehr einfach durchzuführen. Es wird dazu lediglich eine die Sorbensschüttung enthaltende Vorrichtung mit Zu- und Ableitungen für die die Aromastoffe enthaltende wässrige Lösung benötigt. Zweckmässig wird man dazu eine von der Flüssigkeitschromatographie bekannte Säule verwenden, deren Dimensionen auf die Menge der zu bearbeitenden Lösung abgestimmt sind. Dabei ist zu berücksichtigen, dass die Beladungskapazität der verwendeten Sorbentien so ist, dass pro kg Sorbens in der Regel etwa 50 bis 1000 l der wässrigen Lösung behandelt werden können. Dieser Wert ist sowohl von der Art des Sorbens als auch von der Art und insbesondere von der Konzentration der Aromastoffe in der wässrigen Lösung abhängig. Bei sehr konzentrierten bzw. sehr wenig konzentrierten Lösungen können diese Werte daher auch unter- bzw. überschritten werden. In jedem Fall ist es möglich, die für ein bestimmtes Anreicherungsproblem gegebene Kapazität durch wenige Vorversuche zu ermitteln.

Nach der benötigten Menge an Sorbens richtet sich dann selbstverständlich die Grösse der verwendeten Säule. Die wässrige Lösung wird entweder unter ihrem eigenen hydrostatischen Druck auf die Säule gegeben, oder es wird zur Beschleunigung der Durchflussgeschwindigkeit, insbesondere wenn der Säulenwiderstand bei Verwendung von feinteiligen Sorbentien relativ hoch ist, unter erhöhtem Druck aufgegeben. Entsprechende Pumpen, die Drucke bis zu 100 bar und darüber erzeugen können, sind von entsprechenden Hochdruckflüssigkeits-Chromatographiegeräten bekannt.

Auch die erfindungsgemäss verwendeten Sorbentien sind aus der Flüssigkeitschromatographie bekannt. Es sind dies poröse anorganische Sorbentien, insbesondere Kieselgele, deren hydrophile Oberfläche durch Reaktion mit Organosilanen, wobei die gesamte Oberfläche mit chemisch gebundenen organischen Gruppen belegt wird, hydrophobiert ist. Die verwendeten Kieselgele sind hochporös und haben in der Regel eine spezifische Oberfläche von etwa 100 bis 800 m²/g.

Es sind eine Reihe von Organosilanen bekannt, die zur Modifizierung der Oberfläche eingesetzt werden können. Diese Modifizierung ist jedoch nicht Gegenstand der vorliegenden Erfindung, sondern es wird dazu auf die einschlägige Literatur wie z.B. K. K. Unger, Porous Silica, Journal of Chromatography Library, Elsevier, Amsterdam, verwiesen.

Bevorzugt werden nach der vorliegenden Erfindung mit Alkylgruppen mit 1 bis 24, insbesondere mit 2 bis 18 C-Atomen modifizierte Kieselgele verwendet. Die in der wässrigen Lösung enthaltenen Aromastoffe werden selektiv an diesen Sorbentien adsorbiert und dadurch praktisch quantitativ aus der wässrigen Phase entfernt. Zur Gewinnung der adsorbierten Aromastoffe wird der Zufluss der wässrigen Lösung unterbrochen und die Säule mit einer geringen Menge eines organischen Lösungsmittels eluiert, wobei die Aromastoffe quantitativ desorbiert werden und als konzentrierte Lösung in dem organischen Lösungsmittel gewonnen werden. Da zur Desorption pro kg Sorbens eine Menge von nur etwa 50 bis 100 ml organisches Lösungsmittel ausreicht, werden auf diese Weise Anreicherungsfaktoren von bis zu 500 000 erzielt.

Als organische Lösungsmittel werden bevorzugt polare, wasserlösliche Lösungsmittel, wie z.B. niedere Alkohole, niedere Ketone und ähnliche, verwendet. Ein insbesonders aus lebensmittelrechtlichen Gründen besonders bevorzugtes Lösungsmittel ist Ethanol. Dieses kann in reiner Form eingesetzt werden. Da es jedoch auch z.B. üblich ist, Aroma-Essenzen als Lösungen von Aromastoffen in Branntwein zu vertreiben, kann auch unmittelbar Trinkbranntwein zur Desorption der Säule verwendet werden, wobei direkt die gebrauchsfertige Essenz gewonnen wird.

Nach Desorption der Aromastoffe kann das Sorbens unmittelbar erneut mit einer weiteren Charge der wässrigen Lösung beschickt werden. Da sowohl das Sorbensgerüst als auch die chemisch gebundene Oberflächenmodifizierung sehr stabil ist, bleibt das Sorbens über sehr lange Zeit einsatzfähig, und es besteht auch nicht die Gefahr, dass die eluierten Aromastoffe durch das Sorbens verunreinigt werden. Die Aromastoffe werden in der Regel in Form einer Lösung in dem organischen Lösungsmittel weiter verwendet. Es ist jedoch auch möglich, durch Abdampfen des leicht flüchtigen organischen Lösungsmittels die Aromastoffe in reiner Form zu erhalten.

Das erfindungsgemässe Verfahren kann daher zur Gewinnung und Anreicherung von Duft-, Geschmacks- und Aromastoffen aus allen solche Stoffe enthaltenden Naturstoffen oder modifizierten Naturstoffen, wie z.B. Gewürzen, Früchten, Blüten, Beeren, Samen, Tabak, Kaffee und Kakao, eingesetzt werden. Voraussetzung ist dabei lediglich, dass die Aromastoffe in Form einer wässrigen Lösung vorliegen oder in eine solche überführt werden können. Das erfindungsgemässe Verfahren stellt daher eine wesentliche Bereicherung der Technik dar.

Beispiel 1

Aus 1000 l Apfelsaft werden durch Wärmeeinwirkung auf übliche Weise 150 l Konzentrat gewonnen, wobei 850 l Kondensat anfallen. Das Kondensat wird unter einem Druck von 6 bar durch eine Stahlsäule mit 400 mm Länge und 100 mm innerem Durchmesser gepumpt, die mit 3,5 kg eines mit C-8-Alkyl modifizierten Kieselgels (Teilchengrösse 0,05 mm, Oberfläche ca. 200 m²/g) gefüllt ist. Das ablaufende, aromastofffreie Wasser wird verworfen. Die am Sorbens adsorbierten Aromastoffe werden durch Elution mit 2 l Trinkbranntwein gewonnen. Man erhält ein hochfeines natürliches Apfelaroma, das sofort gebrauchsfertig ist.

In analoger Weise können Aromastoffe aus den bei der Konzentrierung anderer Fruchtsäfte anfallenden Kondensaten gewonnen werden.

### Beispiel 2

Durch Heissdampfextraktion von pulverisiertem Röstkaffee wird ein Heisswasserextrakt und ein Brüdenkondensat erhalten. Das Brüdenkondensat wird durch eine Säule entsprechend Beispiel 1 gepumpt. Durch Elution der Säule mit 1000–2000 ml Ethanol erhält man ein Aromastoffkonzentrat, das dem Heisswasserextrakt vor oder nach dem Sprühtrocknen bzw. Lyophilisieren zugesetzt werden kann. Der so gewonnene Pulverkaffee besitzt ein deutlich verbessertes Aroma und ergibt ein deutlich besseres Kaffeegetränk.

### Beispiel 3

Ein gepresster Fruchtsaft wird, z.B. durch Enzymbehandlung, geklärt, filtriert und mit Hilfe einer Polyamidsäule entfärbt. 3000 l des so vorbehandelten Fruchtsafts werden über eine Säule entsprechend Beispiel 1 gepumpt, wonach diese mit 2000 ml Ethanol eluiert wird. Man erhält ein hochkonzentriertes natürliches Fruchtaroma.

Dieses Beispiel ist in analoger Weise für alle Fruchtsäfte anwendbar. Besonders vorteilhaft ist es, dass damit die Aromastoffe von solchen Fruchtsäften gewonnen werden können, die für sich allein nicht oder nur mit Einschränkungen genusstauglich sind.

### Patentansprüche

1. Verfahren zur Gewinnung oder Anreicherung von Aromastoffen aus wässrigen Lösungen, dadurch gekennzeichnet, dass die wässrige Lösung durch eine Schüttung eines mit Kohlenwasserstoffresten mit 1–24 C-Atomen modifizierten Kieselgels geschickt wird, wobei die wässrige Lösung in einer Menge von etwa 50–1000 l/kg Kieselgel eingesetzt wird, und dass die Schüttung danach mit etwa 50 bis etwa 500 ml eines organischen Lösungsmittels pro kg Kieselgel eluiert wird.

2. Verfahren nach Anspruch 1, dadurch gekennzeichnet, dass als organisches Lösungsmittel Ethanol verwendet wird.

### Claims

1. Process for the extraction or concentration of aromatic substances from aqueous solutions, characterised in that the aqueous solution is passed through a bed of silica gel modified with hydrocarbon radicals having 1 to 24 C atoms, whereby the aqueous solution is used in an amount of about 50–1000 l/kg of silica gel, and the bed is subsequently eluted with about 50 to about 500 ml of an organic solvent per kg of silica gel.

2. Process according to claim 1, characterised in that ethanol is used as the organic solvent.

### Revendications

1. Procédé pour l'obtention ou l'enrichissement de substances aromatiques à partir de solutions aqueuses, caractérisé en ce qu'on charge la solution aqueuse à travers une charge d'un gel de silice modifié par des radicaux d'hydrocarbures contenant 1 à 24 atomes de carbone, la solution aqueuse étant utilisée en une quantité d'environ 50–1000 l/kg de gel de silice, tandis que la charge est ensuite éluée avec environ 50 à environ 500 ml d'un solvant organique par kg de gel de silice.

2. Procédé selon la revendication 1, caractérisé en ce que, comme solvant organique, on utilise l'éthanol.